**Europäisches Patentamt**

**European Patent Office**

**Office européen des brevets**

(19)

(11) Veröffentlichungsnummer: **0 004 551**
**B1**

(12) # EUROPÄISCHE PATENTSCHRIFT

(21) Anmeldenummer: **79100585.3**

(22) Anmeldetag: **27.02.79**

(51) Int. Cl.³: **F 24 J 3/00, F 28 D 17/02**

(54) Wärmespeicher

(30) Priorität: **01.04.78 DE 2814102**

(43) Veröffentlichungstag der Anmeldung:
**17.10.79 Patentblatt 79/21**

(45) Bekanntmachung des Hinweises auf die Patenterteilung:
**10.12.80 Patentblatt 80/25**

(84) Benannte Vertragsstaaten:
**BE CH FR GB IT LU NL SE**

(56) Entgegenhaltungen:
**US - A - 4 010 731**
**US - A - 4 088 115**
**US - A - 4 125 108**

(73) Patentinhaber: **Messerschmitt-Bölkow-Blohm Gesellschaft mit beschränkter Haftung**
**Postfach 801109**
**D - 8000 München 80 (DE)**

(72) Erfinder: **Weissenbach, Bertrand, Dr.**
**Putzbrunnerstrasse 172**
**D - 8000 München 82 (DE)**

Courier Press, Leamington Spa, England.

# Wärmespeicher

Die Erfindung betrifft einen Wärmespeicher mit Flüssigkeit, vorzugsweise Wasser und einem Speicherkörper als Wärmetransport-bzw. Speichermedium.

Mit der Erschließung neuer und der Verbesserung bestehender Energiequellen kommt dem Problem der Speicherung von Wärme erhöhte Bedeutung zu. Wenn es gelingt, die zeitliche Verschiebung von Anfall und Bedarf an Energie bzw. Wärme durch wirtschaftliche Speicherung zu beherrschen, so kann damit ein ganz erheblicher Beitrag zur besseren Nutzung und Schonung der Resourcen geleistet werden.

Aus der US - PS - 4 010 731 ist ein Wärmespeicher bekannt geworden, der in einer Grube im Boden eingelassen ist. Die Grube ist mit einer Isolationsschicht gegen den Boden abgedichtet. Ein wasserdichter Behälter ist mit Schotter und Wasser als Speichermaterial aufgefüllt. Kaltes Wasser wird am Boden des Behälters über eine Pumpe entnommen, aufgeheizt und am Boden wieder eingeleitet. Barrieren innerhalb des Behälters trennen warmes und kaltes Medium.

Im VDI-Bericht Nr. 288, 1977, S. 47ff ist ein Aquifer-Speicher beschrieben, der sich zusammensetzt aus den Komponenten Abgrenzung nach außen, Entnahmesystem für Vor- und Rücklauf, Wärmedämmung, Wasseraufbereitung und Hilfsanlagen. In einer oberflächennahen, wasserführenden Schicht wird durch Niederbringen einer Dichtungsschürze bis in den wasserundurchlässigen Untergrund eine abgeschlossene Tasse geschaffen. Die Tasse wird mit Wasser gefüllt. Die Ladung des Speichers erfolgt durch Einleiten von Warmwasser über Sickerungen im oberen Teil des Speichers, wobei gleichzeitig mit Hilfe von bis nahe an die untere Begrenzung reichende Horizontalbrunnen kaltes Wasser entnommen wird. Das Entladen erfolgt durch Umkehr der Strömungsrichtung.

Ungünstig bei den bekannten Speichern wirkt sich die spezifische Wärmekapazität des aus Schotter oder Porenwasser bestehenden Speicherinhalts gegenüber Wasser allein aus, ebenso die hohe Leitfähigkeit des Schotters zum Vergleich zu Wasser und der hohe Strömungswiderstand, bezogen auf die Ladeleistung.

Aufgabe der Erfindung ist es, die Vorteile, die der Aquiferspeicher bietet, als da sind günstige Geometrie und Ausnutzung des Grundstücks infolge der senkrechten, durch das Erdreich gestützten Wände, hohe Sicherheit, da der Speicherinhalt unter Geländehöhe liegt, die Tragfähigkeit des Speicherinhaltes, welche besondere Stützkonstruktionen erübrigt, der hohe Strömungswiderstand, soweit er Verwirbelungen verhindert und eine Konvektion erschwert und die geringe Beeinträchtigung der Nutzung des Grundstücks mit den Vorteilen der Verwendung von Wasser allein als Speichermedium, d. h. der großen spezifischen Wärmekapazität des Wassers und der kleinen Wärmeleitfähigkeit des Wassers weitgehend zu vereinigen.

Diese Aufgabe ist dadurch gelöst daß der Speicherkörper aus dünnwandigen, locker gelegten Formsteinen besteht, welche Aussparungen zur Aufnahme von Entnahmerohren, die von den Formsteinen gehalten werden, aufweisen.

Eine weitere günstige Ausgestaltung ergibt sich, wenn man die Formsteine als tragendes Element verwendet, d. h., daß die Formsteine die Speicherabdeckung tragen.

Zur Verlängerung der Wärmeleitwege ist weiter vorgesehen, daß die Formsteine einen scherengitterähnlichen Aufbau besitzen.

Zur Verhinderung der Konvektion können die obersten Lagen und Randschichten der Formsteine mit porösem Material, wie Kies, Sand, Glaswolle o. ä. gefüllt sein.

Für die Ausdehnung des Wassers sind besondere Kanäle vorgesehen. Zur Verhinderung von Konvektion an den Seitenflächen können dort auch Hohlsteine gelegt werden, welche mit porösem Material gefüllt sind.

Alternativ werden die Hohlräume an den Seitenflächen gegenüber dem Speicherinhalt abgedichtet und über Leitungen mit Luft gefüllt.

Weitere vorteilhafte Ausgestaltungen ergeben sich aus den weiteren Unteransprüchen.

Der erfindungsgemäße Speicher weist u. a. den Vorteil auf, daß die bei mit Kies gefüllten Speichern infolge der innerhalb des Speichers herrschenden Temperaturdifferenzen eintretenden chemischen Massentransporte notwendig werdende chemische Überwachung ohne besonderen Aufwand möglich ist. Das definierte Füllmaterial erlaubt die Anpassung an die Einsatzgegebenheiten. Die Kontaktflächen zwischen Wasser und Füllmaterial können wesentlich verringert werden. Insgesamt wird sowohl das Speichervolumen verkleinert als auch durch Verringerung der Übergangszonen und der Toträume besser ausgenutzt, was zu erheblichen Kostenvorteilen führt. Der Speicher besitzt die Qualitäten eines eingegrabenen, wartungsfreien Betonbehälters, wobei jedoch die Gefahr der Rissbildung infolge Wärmespannungen durch Verwendung schmaler, elastischer, vom Erdreich gestützter Wände weitgehend vermieden wird. Durch die Füllung mit Formsteinen können auch die inneren Strömungswiderstände den lokalen Erfordernissen im Speicher angepaßt werden.

Die Erfindung ist in den nachfolgenden Figuren und der Beschreibung näher erläutert. Es zeigen:

Fig. 1 einen perspektivischen Schnitt durch einen Wärmespeicher;

Fig. 2, 3 Ausführungsformen der Formsteine.

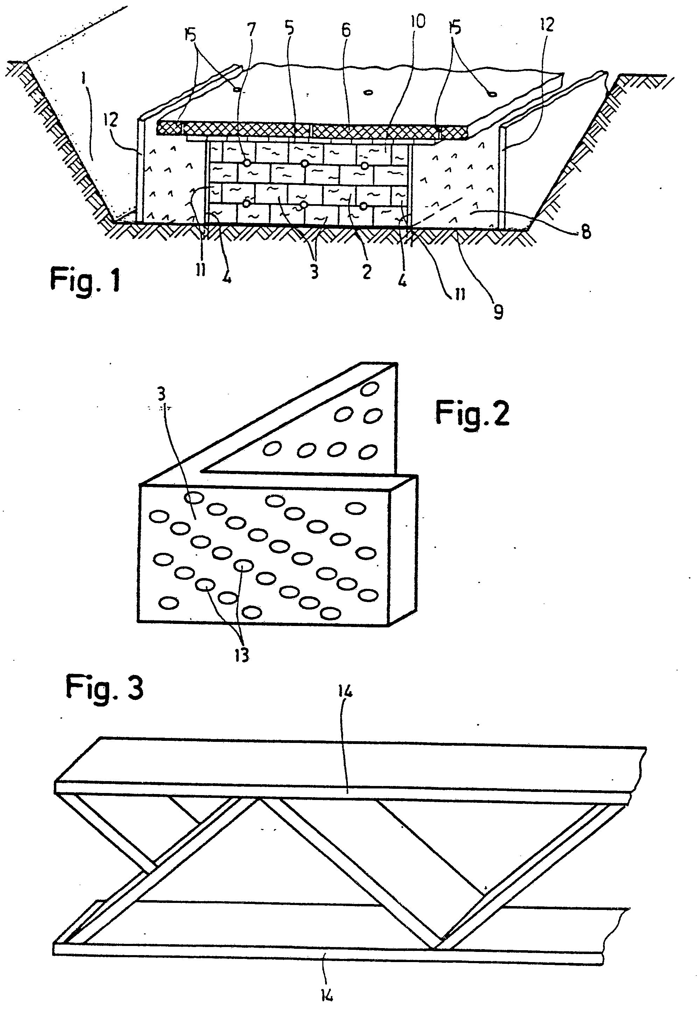

Gemäß Fig. 1 ist in einer offenen, bis auf einen wasserundurchlässigen Untergrund 9 reichenden Baugrube 1 ein Speicherkörper 2 aus Formsteinen 3 aufgeschlichtet. Der Speicherkörper 2 ist seitlich von einer wasserundurchlässigen Wand 4 umschlossen, die vom Speicherkörper 2 bzw. dem umgebenden Material gestützt wird. Die Abdeckung von oben erfolgt durch Abdeckplatten 5, welche zur Verhinderung des Ausdampfens vergossen werden. Wahlweise kann auf die Abdeckplatten 5 auch eine Bitumenschicht oder eine nicht näher dargestellte Kunststoffolie aufgebracht werden, die über den Speicherkörper hinaus in den umgebenden Ringraum 8 hineinreicht. Über diese als Dampfsperre dienende Schicht ist eine Wärmedämmung 6 gelegt, welche gegen das Eindringen der Oberflächenwasser geschützt ist. Die Entnahmerohre 7 werden beim Schlichten der Formsteine 3 eingelegt und durch diese fixiert. Der so gebildete Speicherraum wird anschließend mit Wasser gefüllt.

Um eine Wärmeleitung durch Konvektion im oberen Bereich des Speichers auszuschalten, werden die obersten Lagen 10 der Formsteine in Höhe der Entnahmerohre 7 mit porösem Material aufgefüllt. Wahlweise werden Hohlsteine gelegt, welche ebenfalls mit porösem Material gefüllt sind. Das poröse Material kann in beiden Fällen Kies, Sand, Glaswolle o. ä. geeignetes, Konvektion verhinderndes Material sein.

Die Hohlräume an den Seitenflächen 11 können gegenüber dem Speicherinhalt abgedichtet und über nicht näher dargestellte Leitungen mit Luft aufgefüllt werden. Ebseno kann um den Speicher eine zweite Umrandung 12 gelegt werden, welche als Wärmedämmung dient. Öffnungen 15 sorgen für die Belüftung der Konstruktion.

Alle Einbauten können mit einem Oberflächenschutz gegen chemische Auswaschungen versehen sein bzw. es können die Oberflächen durch gezielte chemische Wasseraufbereitung inert gehalten werden. Die Formsteine, sh. auch Fig. 2 und 3, sind so ausgelegt, daß sich ein möglichst großes Wasservolumen je Raumeinheit ergibt und Wärmebrücken infolge der hohen Leitfähigkeit des festen Materials weitgehend vermieden werden. Fig. 1 geht von einem Speicher aus, dessen Unterseite von einer wasserundurchlässigen natürlich vorhandenen Schicht gebildet wird. Bei Fehlen solcher natürlichen Schichten kann ebensogut in bekannter, nicht näher dargestellter Weise nach unten ein künstlicher Abschluß hergestellt werden.

Die Umrandung 12 kann auch als Schmalschlitzwand bekannter Bauart ausgeführt werden, so daß die seitliche Anschüttung mit Material geringer Durchlässigkeit wie Schluff, Bentonit o. ä. enthalten kann.

Die Fig. 2, 3 zeigen Ausführungsformen von Formsteinen, wobei in Fig. 2 das Beispiel eines Formsteines mit elliptischen Aussparungen 13 zur Verlängerung der Wärmeleitwege und Verringerung des Festkörpervolumens zeigt.

Fig. 3 zeigt einen Formstein nach der Art eines Scherengitters mit besonders niedrigem Festkörpervolumen.

Die jeweils notwendige Bewehrung 14 liegt in Richtung der Temperaturschichten, so daß deren Wärmeleitfähigkeit sich nicht störend auswirkt.

**Patentansprüche**

1. Wärmespeicher mit Flüssigkeit, vorzugsweise Wasser und einem Speicherkörper als Wärmetransport-bzw. Speichermedium, dadurch gekennzeichnet, daß der Speicherkörper (2) aus dünnwandigen, locker gelegten Formsteinen (3) besteht, welche Aussparungen zur Aufnahme von Entnahmerohren (7), die von den Formsteinen (3) gehalten werden, aufweisen.

2. Wärmespeicher nach Anspruch 1, dadurch gekennzeichnet, daß die Formsteine (13) als tragendes Element für die Speicherabdeckung (5) ausgelegt sind.

3. Wärmespeicher nach Anspruch 1 und/oder Anspruch 2, dadurch gekennzeichnet, daß die Abdeckung des Speicherkörpers (2) mittels locker aufgelegter Abdeckplatten (5) erfolgt und daß die Fugen der Platten (5) mit dampfdichtem Material vergossen sind.

4. Wärmespeicher nach Anspruch 3, dadurch gekennzeichnet, daß auf die Abdeckplatten (5) eine Bitumenschicht aufgelegt ist.

5. Wärmespeicher nach Anspruch 3, dadurch gekennzeichnet, daß auf die Abdeckplatten (5) eine dampfdichte Folie aufgelegt ist.

6. Wärmespeicher nach Anspruch 4 oder 5, dadurch gekennzeichnet, daß der Bitumenschicht oder dampfdichten Folie eine gegen Eindringen des Oberflächenwassers geschützte Wärmedämmung (6) folgt und daß diese verschließbare Belüftungsöffnungen (15) aufweist.

7. Wärmespeicher nach einem oder mehreren der vorhergehenden Ansprüche, dadurch gekennzeichnet, daß der aus den Formsteinen (3) gebildete Speicherkörper (2) seitlich mit Material geringer Durchlässigkeit wie Schluff, Bentonit o. ä. im Sinne einer Aufnahme des Druckes der Anschüttung aufgefüllt ist.

8. Wärmespeicher nach Anspruch 7, dadurch gekennzeichnet, daß die Anschüttung durch eine Schmalschlitzwand (12) ersetzt ist.

9. Wärmespeicher nach einem oder mehreren der vorhergehenden Ansprüche, dadurch gekennzeichnet, daß die Seitenflächen (11) des Speicherkörpers (2) aus geschlossenen Hohlsteinen bestehen.

10. Wärmespeicher nach Anspruch 9, dadurch gekennzeichnet, daß die geschlossenen Hohlsteine mit Wasser und einem die Konvektion vehindernden Material gefüllt sind.

11. Wärmespeicher nach Anspruch 9, dadurch gekennzeichnet, daß die geschlossenen Hohlsteine mit einer Luftleitung miteinander verbunden sind.

12. Wärmespeicher nach einem oder mehreren der vorhergehenden Ansprüche, dadurch gekennzeichnet, daß die Formsteine (3) einen scherengitterähnlichen Aufbau besitzen.

13. Wärmespeicher nach Anspruch 12, dadurch gekennzeichnet, daß die Formsteine (3) perforiert sind.

14. Wärmespeicher nach Anspruch 12 oder 13, dadurch gekennzeichnet, daß die obersten Lagen (10) der Formsteine (3) und die Seitenflächen (11) mit porösem Konvektion verhinderndem Material, wie Kies, Sand, Glaswolle o. ä. gefüllt sind.

15. Wärmespeicher nach den vorhergehenden Ansprüchen, dadurch gekennzeichnet, daß die den Speicherkörper bildenden Formsteine (3) und sonstigen Einrichtungen mit einem Oberflächenschutz versehen sind.

16. Wärmespeicher nach einem der vorhergehenden Ansprüche, dadurch gekennzeichnet, daß der Oberflächenschutz mittels chemischer Behandlung des Speicherwassers aufbringbar ist.

## Claims

1. Heat accumulator containing a liquid, preferably water, and an accumulator as heat conductor or storage medium, characterized by the accumulator (2) consisting of thin-walled, loosely laid shaped bricks (3) with spaces for extraction pipes (7) held by the shaped bricks (3).

2. Heat accumulator according to specification 1, characterized by the shaped bricks (13) being used as supporting elements for the accumulator covering (5).

3. Heat accumulator according to specification 1 and or specification 2, characterized by the covering of the accumulator (2) consisting of loosely laid covering plates (5) and the joints of the plates (5) being filled with steamproof material.

4. Heat accumulator according to specification 3, characterized by the covering plates having a bitumen cover.

5. Heat accumulator according to specification 3, characterized by the covering plates (5) being covered with a steamproof foil.

6. Heat accumulator according to specification 4 or 5, characterized by the bitumen cover or the steamproof foil being followed by heat insulation (6) protected against the penetration of surface water and the heat insulation being equipped with aeration openings which can be opened and closed.

7. Heat accumulator according to one or more of the preceding specifications, characterized by the accumulator (2) formed by the shaped bricks (3) being filled on the sides with material of low permeability such as silt, bentonite or others to receive the pressure of the fill.

8. Heat accumulator according to specification 7, characterized by the fill being replaced by a narrow slit wall (12).

9. Heat accumulator according to one or more of the preceding specifications, characterized by the side panels (11) of the accumulator (2) consisting of closed hollow blocks.

10. Heat accumulator according to specification 9, characterized by the closed hollow blocks being filled with water and a material preventing convection.

11. Heat accumulator according to specification 9, characterized by the closed hollow blocks being connected with each other via air ducts.

12. Heat accumulator according to one or more of the preceding specifications, characterized by the shaped bricks (3) being laid in a pattern similar to a St. Andrew's cross.

13. Heat accumulator according to specification 12, characterized by the shaped bricks (3) being perforated.

14. Heat accumulator according to specification 12 or 13, characterized by the upper layers (10) of the shaped bricks (3) and the side panels (11) being filled with material preventing porous convection, such as gravel, sand, glass wool or similar materials.

15. Heat accumulator according to the preceding specifications, characterized by the shaped bricks (3) constituting the accumulator and the other devices being coated with surface protection.

16. Heat accumulator according to one of the preceding specifications, characterized by the surface protection being applicable by chemically treating the storage water.

## Revendications

1. Accumulateur thermique constitué par un fluide caloporteur, eau de préférence, et un corps accumulateur. Caractérisation: le corps accumulateur (2) est constitué par des briques moulées (3) à parois minces, empilées sans mortier et munies d'encoches formant logements pour des tubes de prélèvement (7) maintenus en place par les briques.

2. Accumulateur thermique suivant spécification 1. Caractérisation: les briques moulées (13) sont conçues comme éléments supports du dallage de recouvrement (5) du corps accumulateur.

3. Accumulateur thermique suivant spécification 1 et/ou spécifications 2. Caractérisation: le corps accumulateur (2) est couvert d'un dallage (5) posé sans mortier, les joints entre les dalles étant scellés un matériau étanche à la vapeur.

4. Accumulateur thermique suivant spécification 3. Caractérisation: le dallage de recouvrement (5) est couvert d'une couche bitumineuse.

5. Accumulateur thermique suivant spécification 3. Caractérisation: le dallage de recouvrement (5) est couvert d'une feuille pare-vapeur.

6. Accumulateur thermique suivant spécification 4 ou 5. Caractérisation: sur la couche bitumineuse ou le feuille pare-vapeur est posée une couche de matériau calorifuge (6), protégée contre la pénétration d'eau superficielle et munie de trous d'aération (15) pouvant être obturés.

7. Accumulateur thermique suivant un des spécifications précédentes. Caractérisation: les parties latérales du corps accumulateur (2), constituées par des briques moulées (3) sont remplies d'une matière de faible perméabilité (limon, bentonite etc.) pour mieux résister à la poussée du remblai.

8. Accumulateur thermique suivant spécification 7. Caractérisation: le remblai est remplacé par une paroi mince (12) moulée dans le sol.

9. Accumulateur thermique suivant une ou plusieurs des spécifications précédentes. Caractérisation: les parties latérales (11) du corps accumulateur sont constituées par des briques creuses fermées.

10. Accumulateur thermique suivant spécification 9. Caractérisation: les briques creuses fermées sont remplies d'eau et d'une matière empêchant la convection.

11. Accumulateur thermique suivant spécification 9. Caractérisation: les briques creuses fermées sont reliées entre elles par une canalisation d'air.

12. Accumulateur thermique suivant une ou plusieurs des spécifications précédentes. Caractérisation: les briques moulées (3) ont une structure en treillis.

13. Accumulateur thermique suivant spécification 12. Caractérisation: les briques moulées (3) sont perforées.

14. Accumulateur thermique suivant spécification 12 ou 13. Caractérisation: les couches de briques supérieures (10) et les parties latérales (11) du corps accumulateur sont remplies d'une matière poreuse empêchant la convection (gravier, sable, laine de verre etc.).

15. Accumulateur thermique suivant les spécifications précédentes. Caractérisation: les briques moulées (3), éléments constitutifs du corps accumulateur, et les autres éléments sont munis d'une protection superficielle.

16. Accumulateur thermique suivant une des spécifications précédentes. Caractérisation: la protection superficielle peut être appliquée par traitement chimique de l'eau caloporteuse.

0 004 551

Fig. 1

Fig. 2

Fig. 3